# EUROPÄISCHE PATENTSCHRIFT

(11) **EP 0 458 113 B1**
(45) Veröffentlichungstag und Bekanntmachung des Hinweises auf die Patenterteilung: **02.02.1994**
(21) Anmeldenummer: 91107264.3
(22) Anmeldetag: 04.05.1991
(51) Int. Cl.: B62D 27/06, B60R 11/00, B60Q 1/26

(54) **Kastenkonstruktion, insbesondere für Nutzfahrzeuge wie Brandschutzfahrzeuge**
Body construction part for a utility vehicle, for example a fire protection vehicle
Construction de caisse, en particulier pour véhicule utilitaire, par exemple véhicule de lutte contre l'incendie

(30) Priorität: 19.05.1990 DE 4016209
(43) Veröffentlichungstag der Anmeldung: 27.11.1991
(73) Patentinhaber: Iveco Magirus Aktiengesellschaft, D-89017 Ulm (DE)
(72) Erfinder: Zawadke, Thomas, W-7834 Herbolzheim 1 (DE); Seidel, Wolfgang, W-7900 Ulm (DE)
(74) Vertreter: TER MEER STEINMEISTER & PARTNER GbR

(56) Entgegenhaltungen:
- AT-B- 328 868
- DE-A- 1 755 279
- DE-A- 3 446 734
- DE-U- 8 812 520
- SE-A- 453 907
- US-A- 3 253 136
- US-A- 4 565 402

## Beschreibung

Die Erfindung betrifft einen teleskopierbaren Befestigungsmast in der Karosserie eines Kraftfahrzeuges mit den Merkmalen des Oberbegriffs des Anspruchs 1

Aus DE-A-1 755 279 ist ein teleskopierbarer Befestigungsmast der vorgenannten Art bekannt, welcher zur Befestigung einer Warnlampe dient. Der Befestigungsmast kann in einem Holm der Fahrzeugkarosserie angeordnet sein. Hierzu bedarf der Karosserieholm vielfach einer Behandlung, um insbesondere die Geradlinigkeit über die gesamte Länge des Karosserieholms herzustellen, in welcher der (geradlinige) Befestigungsmast aufgenommen ist. Die Befestigung des Befestigungsmastes im Holm ist vergleichsweise aufwendig getroffen.

Aufgabe der Erfindung ist die Schaffung eines teleskopierbaren Befestigungsmastes der eingangs genannten Art, welcher einfach aufgebaut ist, schnell und sicher gehandhabt und insbesondere ohne großen Aufwand an der Karosserie des Fahrzeugs befestigt werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 11.

Wesen der Erfindung ist die Anordnung des teleskopierbaren Befestigungsmastes in einer (vielfach ohnehin vorhandenen) tragenden Profilleiste einer Kastenkonstruktion eines Nutzfahrzeuges. Die tragende Profilleiste besitzt Hohlräume oder Aussparungen und bedarf keiner gesonderten Behandlung, um den geraden teleskopierbaren Befestigungsmast aufnehmen zu können. Der teleskopierbare Befestigungsmast ist mittels Handrad stufenlos verstell- und fixierbar. Die tragende, den teleskopierbaren Befestigungsmast aufnehmende Profilleiste verläuft hierbei bevorzugt vertikal, und es ist der teleskopierbare Mast nach oben herausziehbar und fixierbar, wobei in besonders vorteilhafter Ausgestaltung insbesondere ein Eckpfosten der Kastenkonstruktion die tragende Profilleiste ist. Am freien Mastende können diverse Funktionsteile des Nutzfahrzeuges befestigt sein, insbesondere Flutlichtstrahler, Rundum-Kennleuchten, Arbeitsstellen-Scheinwerfer, Suchscheinwerfer, Blitzlampen, Antennen, Lautsprecher, Kennzeichnungen, Verkehrsführungsgeräte oder dergleichen.

Die Erfindung schafft mithin einen vielseitig einsetzbaren Allzweckmast zur Aufnahme unterschiedlicher Warn- und/oder Arbeitsgeräte. Durch die Integration des Masts in den tragenden Teil der Kastenkonstruktion des Nutzfahrzeugs ergibt sich ein minimaler Platzbedarf. In der tragenden Profilleiste wird ein Raum ausgenutzt, der nach dem Stand der Technik ungenutzt bleibt. Im oder am Aufbau oder auf dem Dach des Fahrzeugs wird kein zusätzlicher Platz benötigt. Die Standsicherheit des Allzweckmastes ist enorm. Die Unfallgefahr ist minimal. Bei Sturm ist keine zusätzliche Verspannung erforderlich. Besonderer Vorteil der Erfindung ist die einfache Bedienung durch eine einzige Bedienungsperson. Strenge Normen bei Brandschutzfahrzeugen können durch die Erfindung erfüllt werden. Im Dachbereich entsteht keine Behinderung. Das Dach ist frei begehbar, die Entnahme von Gegenständen und Arbeiten auf dem Dach sind störungsfrei möglich. Da keine Teile am Fahrzeugaufbau nach außen hin vorstehen, wie dies bei fest montierten bekannten Lichtmasten der Fall ist, ist auch von dieser Seite keine erhöhte Unfallgefahr gegeben. Der Lichtmast kann ohne Fremdenergie manuell betrieben werden, wenn auch hydraulische Varianten für ein Ausfahren des Mastes möglich sind. Der Allzweckmast findet vornehmlich Verwendung bei Aluminiumaufbauten, aber auch bei Stahlgerippe-Aufbauten sowie bei Kunststoff-Aufbauten (z.B. Kabinen).

Die Erfindung wird nachfolgend anhand von Ausführungsbeispielen unter Bezugnahme auf die beigefügte Zeichnung näher erläutert; es zeigen:
- Fig. 1: in schematischer abgebrochener Seitenansicht eine Kastenkonstruktion eines Brandschutzfahrzeugs mit seitlichem hochstehenden teleskopierbaren Mast im Eckpfostenbereich,
- Fig. 2, 3 und 4: mögliche Fixierungsvarianten des Mastes im Eckpfosten,
- Fig. 5: aufgebrochene Seitenansicht der Einzelheit W der Fig. 1 im Vertikalschnitt A-A der Fig.6,
- Fig. 6: Querschnitt B-B der Einzelheit W gemäß Fig.5,
- Fig. 7 bis 10: mögliche Ausführungsvarianten einer Befestigung des Masts im Dachbereich der Kastenkonstruktion,
- Fig. 11: einer Klemmbefestigung des herausziehbaren Teils des teleskopierbaren Masts am feststehenden Mastteil,
- Fig. 12: schematische Draufsicht auf die Ausführungsvariante gemäß Fig. 11, und
- Fig. 13 bis 16: diverse Anwendungsmöglichkeiten des teleskopierbaren Masts mit oberseitiger Befestigung eines Flutlichtstrahlers, einer Rundum-Kennleuchte, eines Arbeitsstellen-Scheinwerfers bzw. einer Antenne.

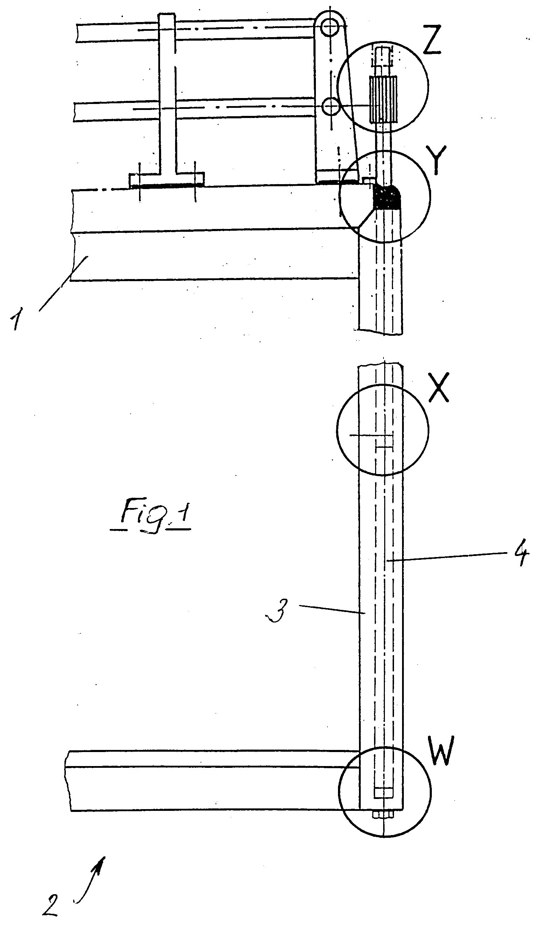

Eine Kastenkonstruktion (1) eines Brandschutzfahrzeugs (2) gemäß Fig. 1 weist (unter anderem) ein Außengerippe auf, welches sich je nach Art des Brandschutzfahrzeugs aus unterschiedlichen ausgesparten oder hohlen Profilleisten zusammensetzt, von denen zumindest ein Teil tragende Profilleisten (3) des Aufbaus sind.

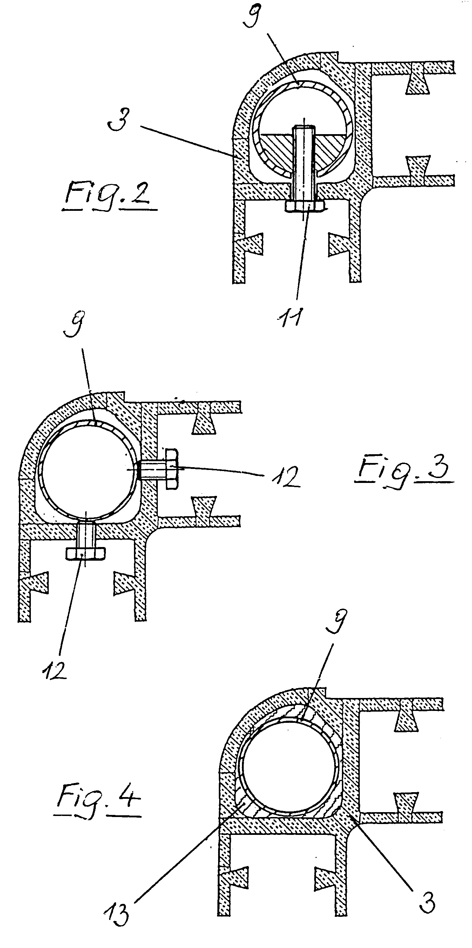

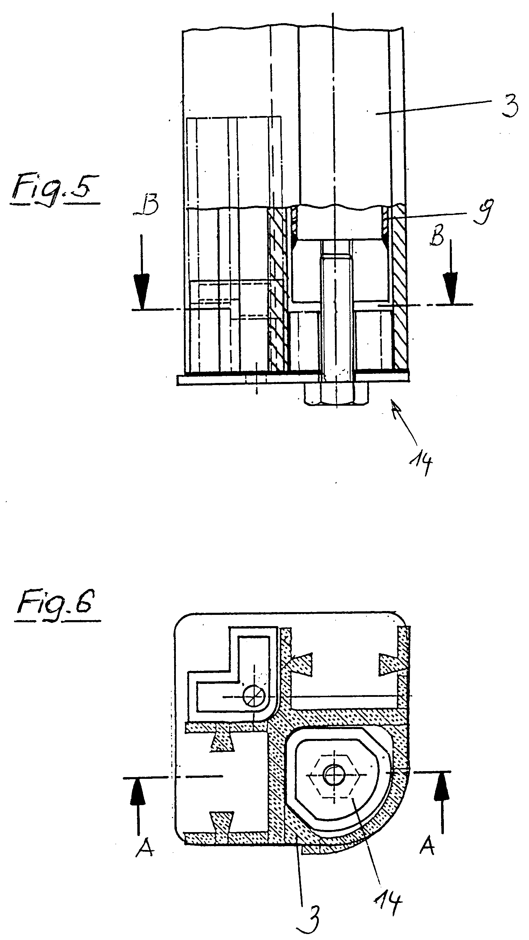

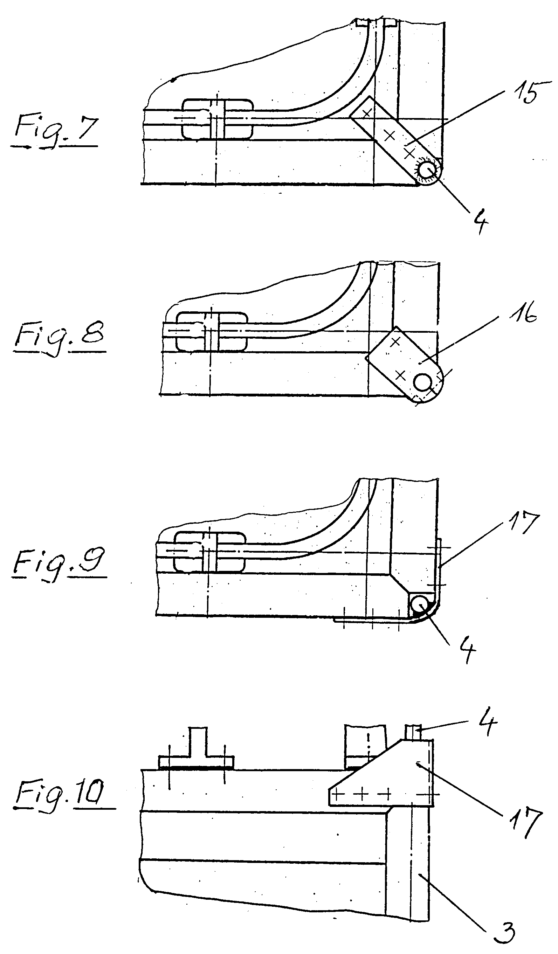

Gemäß Fig. 1 ist ein vertikaler Eckpfosten der Kastenkonstruktion, welcher eine tragende Profilleiste (3) des Aufbaus ist, mit einem fest am Fahrzeug montierten teleskopierbaren Mast (4) in integrierender Weise verbunden, wie dies insbesondere aus den Fig. 2, 3 und 4 zu entnehmen ist. Die hohle tragende vertikale Profilleiste (3) besitzt genügend Hohlraum, um ein vertikales Befestigungsrohr (9) des teleskopierbaren Masts (4) vollständig aufzunehmen.

Gemäß Fig. 2 ist das Befestigungsrohr (9) mittels einer Durchgangsverschraubung (11) mit der tragenden Profilleiste (3) verbunden.

Gemäß Ausführungsvariante der Fig. 3 sind diverse umfangsmäßig versetzte Klemmschrauben (12) vorgesehen, welche an geeigneter Stelle durch eine Wand der tragenden Profilleiste (3) geschraubt sind und das innere Befestigungsrohr (9) fest verklemmen. Bei dieser Ausführungsvariante, welche besonders einfach aufgebaut ist, ist ein nachträglicher Einbau eines teleskopierbaren Mastes bei einer Kastenkonstruktion möglich. Die Länge des Befestigungsrohres kann hierbei variabel gewählt sein. Eine bestehende Kastenkonstruktion braucht nicht abgeändert zu werden.

Gemäß Fig. 4 ist das Befestigungsrohr durch eine Ausschäumung (13) fest mit der tragenden Profilleiste (3) verbunden. Eine derartige feste Verbindung ist besonders einfach in der Fertigung und mithin kostengünstig.

In den Fig. 5 und 6 sind aufgebrochene Seitenansicht und Querschnittsansicht einer Bodenbefestigung des Befestigungsrohrs (9) im Bereich des Bodens der Kastenkonstruktion veranschaulicht (Einzelheit W der Fig. 1). Hierbei ist eine Spreizkralle (14) vorgesehen, welche anstelle des unteren Profilabschlusses ausgebildet ist.

Diverse Befestigungsmöglichkeiten des feststehenden Befestigungsrohrs (9) im Dachbereich der Kastenkonstruktion (1) sind aus den Fig. 7, 8, 9 und 10 zu entnehmen. Ausführungsvariante gemäß Fig. 7 sieht eine geschweißte Lasche (15) vor, welche auf dem Dach des Aufbaus eines Brandschutzfahrzeuges eckpfostenseitig verschraubt ist.

Ausführungsvariante gemäß Fig. 8 sieht ein Klemmstück (15) vor, welches seinerseits mit dem Dach verschraubt ist.

Die in Drauf- und Seitenansicht gezeigte Ausführungsvariante gemäß den Fig. 9 bzw. 10 weist ein geschweißtes Blech mit Seitenprofil (17) auf, welches mit einem oberen Dacheck der Kastenkonstruktion (1) verschraubt ist.

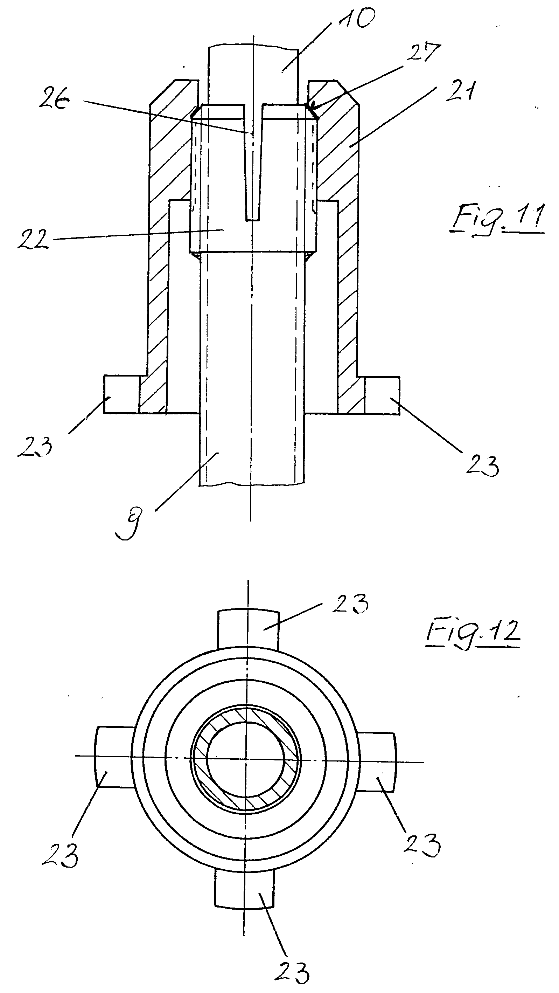

Der in der Zeichnung gezeigte teleskopierbare Mast besitzt neben dem feststehenden fahrzeugfesten vertikalen Befestigungsrohr (9) im Innern eines vertikalen Eckpfostens des Aufbaus ein herausziehbares Teil (10), welches wie das Befestigungsrohr 9) praktisch die gesamte Länge der tragenden Profilleiste (3) ausmacht. Das herausziehbare Teil (10) des teleskopierbaren Masts (4) kann in unterschiedlicher Weise bezüglich des feststehenden Befestigungsrohrs (9) längsverschoben und stufenlos höhenverstellt werden, und zwar mit Hilfe einfacher Mittel durch eine einzige Bedienungsperson. Gemäß Ausführungsvariante der Fig.11 ist für eine derartige stufenlose Höhenverstellung bzw. -fixierung eine Rändelschraube (18) (in ausgezogener Linie) oder eine Hebelschraube (19) (in strichpunktierter Linie) vorgesehen.

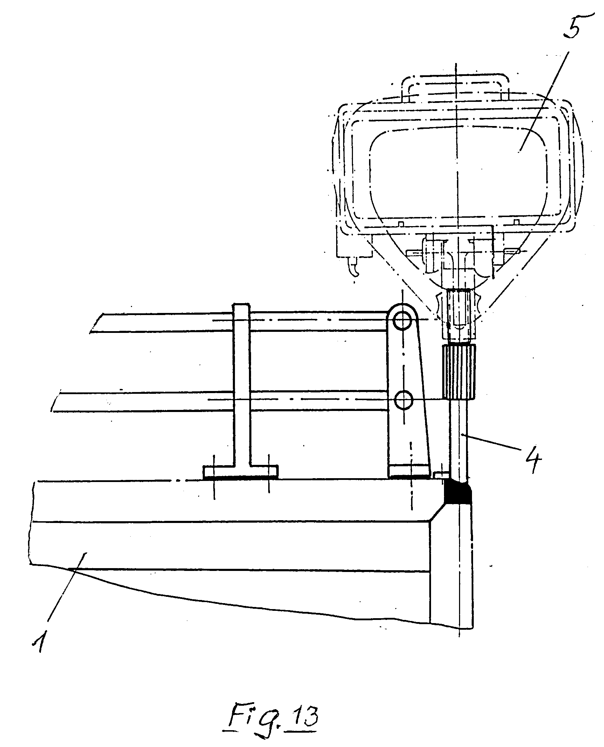

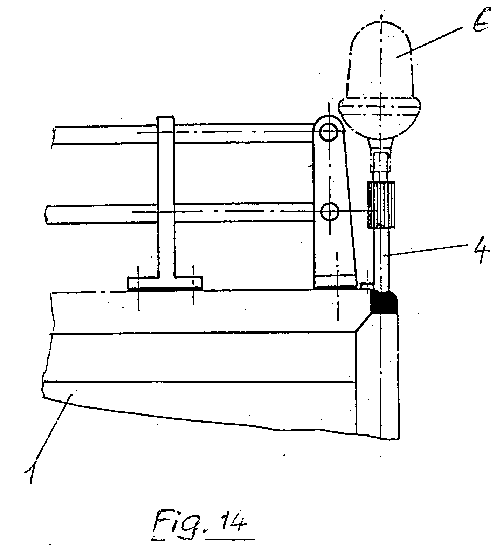

Eine Höhenverstellung und -fixierung des teleskopierbaren Masts ist in schematischer Vertikal- und Draufsicht in Fig. 13 und 14 gezeigt, wobei ein Handrad (21) in Rohrachsrichtung mit Klemmteil (22) vorgesehen ist. Das Klemmteil (22) ist fest oberseitig am Befestigungsrohr (9) angebracht, z.B. verschweißt. Es besitzt umfangsmäßig vier gleich verteilte Schlitze (26) und einen oberen konischen Rand (27). Der äußere Umfang des Klemmteils (22) ist mit einem Gewinde versehen, welches in einem Eingriff mit einem Innendurchmesser des konzentrisch angeordneten Handrads (21) steht. Das Handrad weist eine gerändelte Oberfläche auf und besitzt einen Gegenkonus, welcher mit dem konischen Rand (27) bei Verdrehung des Handrads in Eingriff bringbar ist, um das Klemmteil (22) in Achsrichtung relativ zum Handrad zu verschieben und gleichzeitig radial im Bereich der Schlitze (26) zu verjüngen, so daß der herausziehbare Teil (10) des teleskopierbaren Masts im Verjüngungsbereich des Klemmteils (22) festgeklemmt wird. Das Handrad (21) weist, wie dies insbesondere der Fig. 14 zu entnehmen ist, umfangsmäßig gleich verteilte vier Angriffsteile (23) auf, um einen Kupplungsschlüssel für ein leichtes Lösen des Klemmschlusses anzusetzen, wenn das Handrad zu fest angezogen ist.

In den Fig. 13 bis 16 sind unterschiedliche Anwendungsmöglichkeiten des in der Kastenkonstruktion (1) integrierten höhenverstellbaren teleskopierbaren Mastes (4) gezeigt.

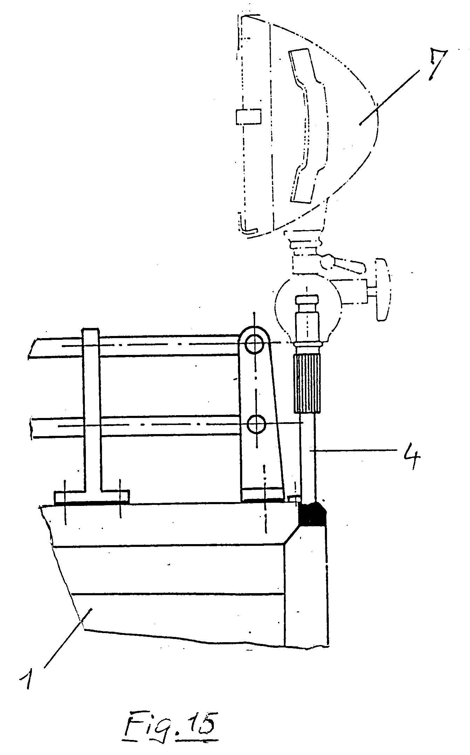

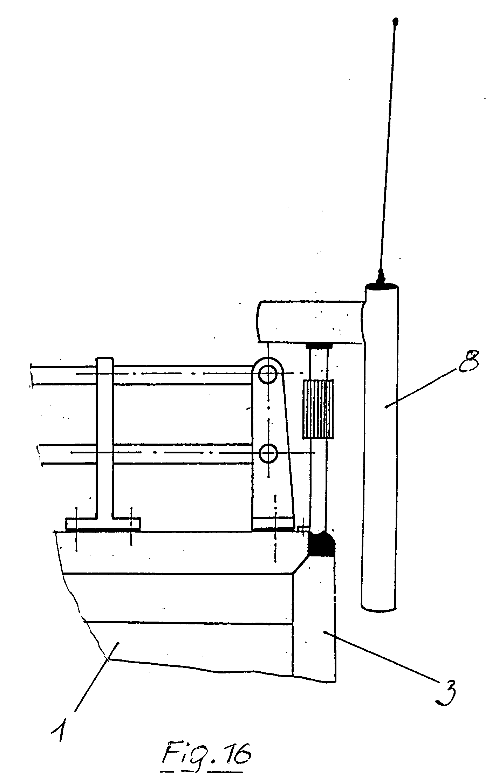

Am oberen Ende des herausziehbaren Teils (10) des Masts ist gemäß Fig. 13 ein Flutlichtstrahler (5) montiert, gemäß Fig. 14 eine Rundum-Kennleuchte (6), gemäß Fig. 15 ein Arbeitsstellen-Scheinwerfer (7), sowie gemäß Fig. 16 eine Antenne (8). Selbstverständlich kann der Mast für weitere Funktionen eingerichtet oder umgerüstet sein, z.B. für Lautsprecher, Kennzeichnungen für taktische Aufgaben (z.B. Einsatzleitung, etc.), Blitzlampen (z.B. auf der Autobahn), oder dergleichen.

## Patentansprüche

1. Teleskopierbarer Befestigungsmast (4) in der Karosserie eines Kraftfahrzeuges, wobei
ein Befestigungsrohr (9) des teleskopierbaren Mastes (4) in einer tragenden hohlen und/oder ausgesparten Profilleiste (3) der Karosserie befestigt und im Befestigungsrohr (9) der herausziehbare Teil des Mastes aufgenommen ist, dadurch gekennzeichnet, daß die Profilleiste Teil einer Kastenkonstruktion eines Nutzfahrzeuges ist und der herausziehbare Teil des Mastes (4) am Befestigungsrohr (9) durch ein koaxiales Handrad (21) mit Klemmteil (22) stufenlos verschieb- und verstellbar ist und das Handrad (21) zumindest ein festes Angriffsteil (23) aufweist, welches mit einem Kupplungsschlüssel in einen Dreheingriff bringbar ist.

2. Befestigungsmast nach Anspruch 1,
dadurch gekennzeichnet,
daß die tragende Profilleiste (3) im wesentlichen vertikal verläuft und der teleskopierbare Mast (4) nach oben herausziehbar und fixierbar ist.

3. Befestigungsmast nach Anspruch 2,
dadurch gekennzeichnet,
daß die tragende Profilleiste (3) ein Eckpfosten der Kastenkonstruktion (1) ist.

4. Befestigungsmast nach einem der Ansprüche 1 bis 3,
dadurch gekennzeichnet,
daß am freien Mastende Flutlichtstrahler (5), Rundum-Kennleuchten (6), Arbeitsstellen-Scheinwerfer (7), Suchscheinwerfer, Blitzlampen, Antennen (8), Lautsprecher und/oder Kennzeichnungen bzw. Verkehrsführungsgeräte befestigt sind.

5. Befestigungsmast nach einem der Ansprüche 1 bis 4,
dadurch gekennzeichnet,
daß der herausziehbare Teil des Mastes (4) aus zwei teleskopierbaren Mastabschnitten besteht.

6. Befestigungsmast nach Anspruch 5,
dadurch gekennzeichnet,
daß der oder die teleskopierbaren Mastabschnitte im wesentlichen der gesamten Länge bzw. Höhe der tragenden Profilleiste (3) entsprechen.

7. Befestigungsmast nach einem der Ansprüche 1 bis 6,
dadurch gekennzeichnet,
daß das Befestigungsrohr (9) mittels Durchgangsverschraubung (11), Klemmschrauben (12) oder Ausschäumung (13) in der tragenden Profilleiste (3) befestigt ist.

8. Befestigungsmast nach einem der Ansprüche 1 bis 7,
dadurch gekennzeichnet,
daß das Befestigungsrohr (9) profilleistenfest auf seiner Bodenseite, d.h. auf der dem herausziehbaren Teil des teleskopierbaren Mastes (4) entgegengesetzten Seite, mittels Spreizkralle (14) verschraubt ist.

9. Befestigungsmast nach einem der Ansprüche 1 bis 8,
dadurch gekennzeichnet,
daß das Befestigungsrohr (9) profilleistenfest auf seiner Oberseite, d.h. auf der dem herausziehbaren Teil des teleskopierbaren Mastes (4) zugewandten Seite, mittels angeschweißter Lasche (15) verschraubt ist.

10. Befestigungsmast nach einem der Ansprüche 1 bis 8,
dadurch gekennzeichnet,
daß das Befestigungsrohr (9) profilleistenfest auf seiner Oberseite, d.h. auf der dem herausziehbaren Teil des teleskopierbaren Mastes (4) zugewandten Seite, mittels Klemmstück (16) verschraubt ist.

11. Befestigungsmast nach einem der Ansprüche 1 bis 8,
dadurch gekennzeichnet,
daß das Befestigungsrohr (9) profilleistenfest auf seiner Oberseite, d.h. auf der dem herausziehbaren Teil des teleskopierbaren Mastes (4) zugewandten Seite, mittels eines angeschweißten Blechs mit Seitenprofil (17) verschraubt ist.

## Claims

1. A telescopic mounting mast (4) in the body of a motor vehicle, wherein a mounting tube (9) of the telescopic mast (4) is mounted in a load-bearing hollow and/or recessed section bar (3) of the body and the extensible part of the mast is accommodated in the mounting tube (9), characterised in that the section bar is part of a box structure of a commercial vehicle and the extensible part of the mast (4) is steplessly displaceable and adjustable on the mounting tube (9) by a coaxial handwheel (21) with a clamping member (22) and the handwheel (21) has at least one fixed engagement member (23) which can be rotated by a coupling wrench.

2. A mounting mast according to Claim 1, characterised in that the load-bearing section bar (3) extends substantially vertically and the telescopic mast (4) can be extended upwardly and fixed.

3. A mounting mast according to Claim 2, characterised in that the load-bearing section bar (3) is a corner post of the box structure (1).

4. A mounting mast according to any one of Claims 1 to 3, characterised in that floodlight projectors (5), rotating identification lamps (6), spot lights (7), searchlight projectors, flashing lights, aerials (8), loudspeakers and/or indicators or traffic control appliances are mounted at the free mast end.

5. A mounting mast according to any one of Claims 1 to 4, characterised in that the extensible part of the mast (4) comprises two telescopic mast portions.

6. A mounting mast according to Claim 5, characterised in that the telescopic mast portion or portions correspond in length substantially to the entire length or height of the load-bearing section bar (3).

7. A mounting mast according to any one of Claims 1 to 4, characterised in that the mounting tube (9) is mounted in the load-bearing section bar (3) by means of a through-screwed connection (11), clamping screws (12) or foam-filling.

8. A mounting mast according to any one of Claims 1 to 7, characterised in that the mounting tube (9) is fastened by means of an expanding claw (14) so as to be fixed to the section bar at its bottom end, i.e. at its end opposite the extensible part of the telescopic mast (4).

9. A mounting mast according to any one of Claims 1 to 8, characterised in that the mounting tube (9) is fastened by means of a welded-on strap (15) so as to be fixed to the section bar at its top end, i.e. at its end nearest the extensible part of the telescopic mast (4).

10. A mounting mast according to any one of Claims 1 to 8, characterised in that the mounting tube (9) is fastened by means of a clamping member (16) so as to be fixed to the section bar at its top end, i.e. at its end nearest the extensible part of the telescopic mast (4).

11. A mounting mast according to any one of Claims 1 to 8, characterised in that the mounting tube (9) is fastened by means of a welded-on plate with a lateral profile (17) so as to be fixed to the section bar at its top end, i.e. at its end nearest the extensible part of the telescopic mast (4).

## Revendications

1. Mât de fixation télescopique (4) pour la carrosserie d'un véhicule automobile, un tube de fixation (9) du mât télescopique (4) étant fixé dans un profilé porteur, creux et/ou ouvert de la carrosserie et le tube de fixation (9) reçoit la partie extractible du mât, mât caractérisé en ce que le profilé fait partie d'une construction en caisse d'un véhicule utilitaire et la partie extractible du mât (4) est coulissante et réglable en continu sur le tube de fixation (9) à l'aide d'un volant à main (21) coaxiale, avec une partie de serrage (22), et le volant à main (21) comporte au moins une pièce d'accrochage (23), fixe, qui peut recevoir une clé pour la rotation.

2. Mât de fixation selon la revendication 1, caractérisé en ce que le profilé porteur (3) est essentiellement vertical et le mât télescopique (4) est extractible par le haut et peut se bloquer.

3. Mât de fixation selon la revendication 2, caractérisé en ce que le profilé porteur (3) est un poteau cornier de la construction en caisse (1).

4. Mât de fixation selon l'une des revendications 1 à 3, caractérisé en ce que l'extrémité libre du mât reçoit un projecteur (5), un signal lumineux avertisseur circulaire (6), un projecteur de zone de travail (7), un projecteur de recherche, des lampes à éclair, des antennes (8), des haut-parleurs et/ou des caractéristiques de référence ou des appareils de guidage de trafic.

5. Mât de fixation selon l'une des revendications 1 à 4, caractérisé en ce que la partie extractible du mât (4) se compose de deux segments de mât télescopique.

6. Mât de fixation selon la revendication 5, caractérisé en ce que le ou les segments de mât télescopique correspondent pour l'essentiel à toute la longueur ou toute la hauteur du profilé porteur (3).

7. Mât de fixation selon l'une des revendications 1 à 6, caractérisé en ce que le tube de fixation (9) est fixé à l'aide de vis traversantes (11), de vis de serrage (12) ou par expansion de mousse (13) dans le profilé porteur (3).

8. Mât de fixation selon l'une des revendications 1 à 7, caractérisé en ce que le tube de fixation (9) est solidaire au profilé du côté du fond, c'est-à-dire sur le côté opposé à la partie extractible du mât télescopique (4) à l'aide de griffes à écartement (14).

9. Mât de fixation selon l'une des revendications 1 à 8, caractérisé en ce que le tube de fixation (9) est vissé solidairement au profilé sur sa face supérieure, c'est-à-dire du côté tourné vers la partie extractible du mât télescopique (4) à l'aide de pattes soudées.

10. Mât de fixation selon l'une des revendications 1 à 8, caractérisé en ce que le tube de fixation (9) est vissé solidairement au profilé au niveau de son côté supérieur, c'est-à-dire du côté tourné vers la partie extractible du mât télescopique (4) à l'aide d'une pièce de serrage (16).

11. Mât de fixation selon l'une des revendications 1 à 8, caractérisé en ce que le tube de fixation (9) est vissé solidairement au profilé, au niveau de son côté supérieur, c'est-à-dire sur la partie tournée vers la partie extractible du mât télescopique (4) l'aide d'une tôle soudée avec le profilé latéral (17) (gousset).
